# EUROPEAN PATENT APPLICATION

(11) **EP 4 406 651 A1**
(43) Date of publication of application: **31.07.2024**
(21) Application number: 24150722.7
(22) Date of filing: 08.01.2024
(51) Int. Cl.: B01L 1/02, B08B 15/02, B25H 1/20, F24F 3/163

(54) **SAFETY CABINET**

(30) Priority: 25.01.2023 NL 2034022
(71) Applicant: Imsirovic, Nermin, 2804 ZE Gouda (NL)
(72) Inventor: Imsirovic, Nermin, 2804 ZE Gouda (NL)
(74) Representative: de Jong, Maurits David

(57) **Abstract**

The present invention relates to a safety cabinet such as for instance a fume hood or biosafety cabinet, comprising:
- a housing provided with a working space, which working space is bounded on the underside by a worktop, on both sides by side walls and on the rear side by a rear wall, and wherein a closable working opening is provided on the front side;
- an air distribution chamber with an air inlet and an air outlet, which air outlet is provided with an exhaust fan which generates underpressure in the air distribution chamber for the purpose of drawing air in from the working space via the air inlet;
- an underpressure channel located under the worktop, which underpressure channel is connected to at least one inflow opening located close to the worktop for the purpose of drawing air in from the working space;
- a filter chamber, which filter chamber pneumatically connects and mutually separates the underpressure channel and the air inlet of the air distribution chamber by means of a filter arrangement for filtering air from the working space flowing from the underpressure channel to the air distribution chamber, which filter chamber extends behind the rear wall from the underpressure channel up to the air inlet of the air distribution chamber.

## Description

The invention relates to a safety cabinet such as for instance a fume hood or biosafety cabinet.

Safety cabinets are widely used in laboratories, pharmacies and hospitals for protection of staff when working with hazardous substances. In a safety cabinet the hazardous substances are prevented by means of a controlled airflow from being able to exit the closable working opening of the working space and being able to come into contact with staff. For this purpose an underpressure is applied in the working space and the air extracted from the working space and the working opening is exhausted and/or recirculated elsewhere. In most cases the extracted air is filtered by means of one or more filtering stages.

The first or the main filters are often arranged under the working space in a filter housing. A drawback of this position is however that liquids leaking in the working space can come into contact with the filters. The correct filtering degree can hereby no longer be guaranteed.

In safety cabinets with a downflow airflow one or more filtering stages are sometimes also arranged above the working space. Although this arrangement entails no risk of contamination with leaked liquids, correctly performing a leakage test on the different filtering stages is often very difficult or even impossible.

It is now an object of the invention to provide a safety cabinet wherein at least one of the above stated drawbacks is reduced or even obviated.

This object is achieved according to the invention with a safety cabinet such as for instance a fume hood or biosafety cabinet, comprising:
- a housing provided with a working space, which working space is bounded on the underside by a worktop, on both sides by side walls and on the rear side by a rear wall, and wherein a closable working opening is provided on the front side;
- an air distribution chamber with an air inlet and an air outlet, which air outlet is provided with an exhaust fan which generates underpressure in the air distribution chamber for the purpose of drawing air in from the working space via the air inlet;
- an underpressure channel located under the worktop, which underpressure channel is connected to at least one inflow opening located close to the worktop for the purpose of drawing air in from the working space;
- a filter chamber, which filter chamber pneumatically connects and mutually separates the underpressure channel and the air inlet of the air distribution chamber by means of a filter arrangement for filtering air from the working space flowing from the underpressure channel to the air distribution chamber, which filter chamber extends behind the rear wall from the underpressure channel up to the air inlet of the air distribution chamber.

The box-like working space provides a space where hazardous substances can be worked with safely. The working space is provided on the underside with a worktop and is further closed by respective side, upper and rear walls. The closable working opening provides access to the working space. The controlled airflow is brought about at least partially by means of an exhaust fan arranged in the air distribution chamber. The exhaust fan generates an underpressure in the air distribution chamber. The air inlet of the air distribution chamber is connected via a suction path to the working space so that the generated underpressure provides for an air displacement from the working space to the air distribution chamber.

The suction path is formed here by an underpressure channel located under the worktop. The underpressure channel is connected to one or more inflow openings located close to the worktop for the purpose of drawing air in from the working space. The inflow opening(s) are located close to the worktop so that substances or vapours which form on the worktop cannot whirl upward but can be extracted straight downward. An inflow opening close to the working opening ensures that a controlled inflow of air through the working opening also takes place, so that no air can escape from the working space through the working opening.

The underpressure channel is connected to a filter chamber. The filter chamber connects the underpressure channel and the air inlet of the air distribution chamber. In the filter chamber a filter arrangement provides for flowthrough filtration of the air from the working space. Because the filter chamber extends behind the rear wall from the underpressure channel up to the air inlet of the air distribution chamber, the filters are not at risk of being contaminated with liquids leaking from the working space.

The suction path is thus formed in the flow direction by, successively, the inflow openings debouching in the working space, the underpressure channel, the filter chamber and then, finally, the air distribution chamber.

A further advantage of the filter chamber behind the rear wall is that the suction path can be kept very short, particularly in the case of recirculation by means of a downflow arrangement. Hereby, the airflow is optimized and less underpressure need be built up to obtain sufficient air displacement.

Another embodiment of a safety cabinet according to the invention is a safety cabinet wherein the air distribution chamber also comprises a downflow outlet which debouches at the top of the working space and which downflow outlet is provided with a downflow fan for recirculating air from the air distribution chamber to the working chamber.

The downflow outlet preferably comprises a downflow filter for additional filtering of the recirculated air.

Providing the air distribution chamber with a downflow outlet which debouches at the top of the working space enables better control of the flow in the working space. Applying an additional filter in the downflow outlet guarantees the safety of the recirculated air.

Another embodiment of a safety cabinet according to the invention is a safety cabinet wherein the air outlet comprises an air outlet filter for additional filtering of the air exhausted via the air outlet.

In the event it may come into contact with persons, the exhausted air can in turn also indirectly cause a safety problem. Applying an air outlet filter enables the exhausted air to be purified further so that it may optionally also flow back into the space in which the safety cabinet is located.

In a preferred embodiment of a safety cabinet according to the invention the filter chamber comprises a closable access opening located opposite the rear wall for the purpose of carrying out maintenance on the filter arrangement.

The improved placement of the filter arrangement greatly simplifies maintenance and inspection of the filter arrangement. Particularly when a closable access opening is arranged in the filter chamber, on the rear side of the safety cabinet. This can for instance be a removable plate or a door.

Another embodiment of a safety cabinet according to the invention is a safety cabinet wherein the at least one inflow opening located close to the worktop extends around the worktop.

Providing the inflow opening or inflow openings around the worktop guarantees a good extraction of hazardous substances released on or at the worktop. Arranging the inflow openings around the worktop particularly also ensures a sufficient inflow of ambient air through the working opening.

In another embodiment of a safety cabinet according to the invention the filter arrangement is arranged wholly on or above the plane in which the worktop extends.

Arranging the filter arrangement at the same height as the worktop, or even wholly above the worktop, prevents contamination of the filter arrangement with liquid to even further extent. Even if large quantities of liquid were to leak, it could still not find its way into the filter arrangement.

In yet another embodiment of a safety cabinet according to the invention the filter arrangement comprises at least one V filter, preferably a plurality of V filters arranged in parallel.

Application of V filters arranged in parallel enables a large filtering surface area to be obtained in the filter arrangement using standard components.

Also according to the invention is an embodiment of a safety cabinet wherein the at least one V filter is arranged in a filter holder, wherein the inflow opening of the at least one V filter is located in the filter holder close to the underpressure channel.

Providing a filter holder in the filter chamber enables the at least one V filter to be arranged sealingly in the filter chamber correctly in simple manner. The filter holder can here have an inflow opening on the underside. The height of the filter arrangement relative to the worktop can also be obtained with the filter holder.

The at least one V filter is here preferably fixed clampingly between the clamping device and the filter holder on the side lying opposite the inflow opening by means of a clamping device.

By providing a clamping device, such as for instance a pressing plate or pressing profile, the at least one V filter can be clamped. This ensures a good seal.

These and other features of the invention are further elucidated with reference to the accompanying drawings.
Figure 1 shows a schematic cross-sectional view of a first embodiment of the safety cabinet according to the invention.
Figure 2 shows a schematic cross-section through line II of the filter chamber and air distribution chamber of the safety cabinet of figure 1.
Figure 3 shows a detail of the cross-section of figure 2.

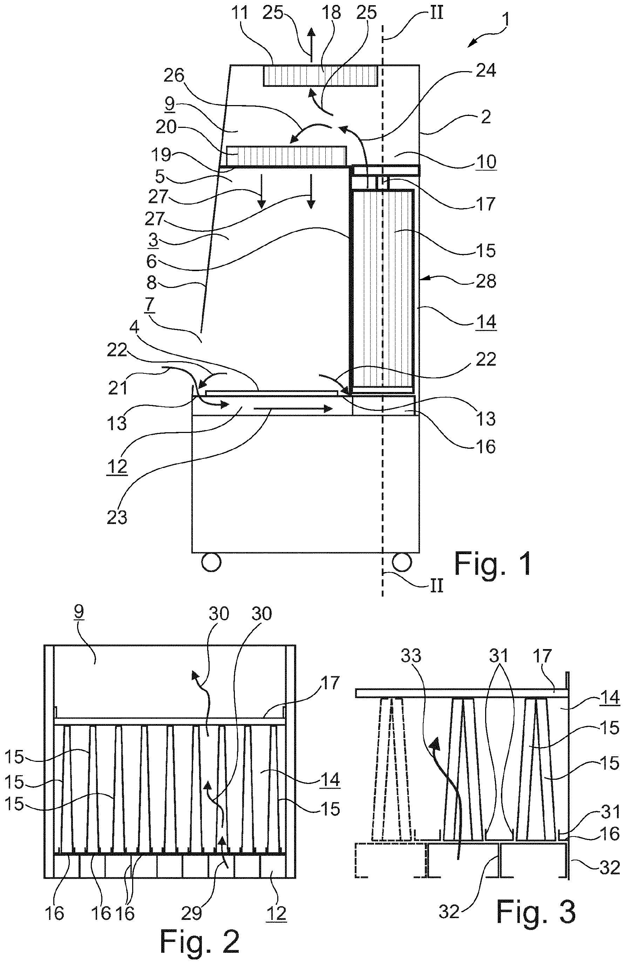

Figure 1 shows a schematic cross-sectional view of a first embodiment of the safety cabinet 1 according to the invention. A working space 3 is provided in the housing 2. The working space 3 is bounded on the lower side by a worktop 4. A side wall 5 is further shown, and a rear wall 6 is provided on the rear side. Arranged on the front side is a closable working opening 7 which can be closed by the front panel 8. At the top of housing 2 is formed an air distribution chamber 9 with an air inlet 10 and an air outlet 11. The air outlet 11 is provided with a fan, which is not shown in the figure.

Arranged under the worktop 4 is an underpressure channel 12. Provided close to worktop 4 are inflow openings 13 for drawing in air from working space 3. The filter chamber 14 is connected to the underpressure channel 12. A filter arrangement 15 is provided in filter chamber 14. The filter arrangement 15 consists of V filters which are arranged in a filter holder 16 on the underside and are fixed by clamping device 17.

Arranged in the air outlet 11 is an air outlet filter 18. The air distribution chamber 9 is also provided with a downflow outlet 19. The downflow outlet 19 is provided with a fan, which is not shown in the figure. Downflow outlet 19 is also provided with a downflow filter 20.

The underpressure which is maintained in working space 3 creates a controlled airflow. Air 21 is drawn in through the working opening 7. Hazardous substances are hereby unable to escape from working space 3. The air 22 above worktop 4 is also drawn into underpressure channel 12 through the inflow openings 13. The airflow 23 is guided to the filter chamber 14 and there flows through filters 15 for the first filtration. The filtered air 24 finds its way into the air distribution chamber 9. A part of the airflow 25 is additionally filtered and exhausted via air outlet 11. Another part of the airflow 26 is recirculated through downflow outlet 19 and finds its way back into working space 3 as additionally filtered air 27.

The rear wall 28 of filter chamber 14 is removable for simplified maintenance of filters 15.

Figure 2 shows a schematic cross-section through line II of filter chamber 14 and air distribution chamber 9 of the safety cabinet 1 of figure 1. The V filters 15 placed in parallel are clearly visible in the filter arrangement. The filters 15 are arranged in filter holders 16. The clamping device 17 is a beam which is arranged over the filters 15. The air 28 flowing through underpressure channel 12 flows through the filter holders 16 on the underside in filters 15. The filtered airflow 29 finds its way into the air distribution chamber 9.

Figure 3 shows a detail of the cross-section of figure 2. The cross-section shows the configuration of the V filters 15 in parallel arrangement. Filters 15 are arranged in filter holders 16. Filter holders 16 are provided with upright profiles 31 which are adapted to the filters 15 in question. The filter holders 16 consist of tubular profiles 32. The airflow 33 can flow from underpressure channel 12 into filter chamber 14 through the tubular profiles 32.

## Claims

1. A safety cabinet such as for instance a fume hood or biosafety cabinet, comprising:
- a housing provided with a working space, which working space is bounded on the underside by a worktop, on both sides by side walls and on the rear side by a rear wall, and wherein a closable working opening is provided on the front side;
- an air distribution chamber with an air inlet and an air outlet, which air outlet is provided with an exhaust fan which generates underpressure in the air distribution chamber for the purpose of drawing air in from the working space via the air inlet;
- an underpressure channel located under the worktop, which underpressure channel is connected to at least one inflow opening located close to the worktop for the purpose of drawing air in from the working space;
- a filter chamber, which filter chamber pneumatically connects and mutually separates the underpressure channel and the air inlet of the air distribution chamber by means of a filter arrangement for filtering air from the working space flowing from the underpressure channel to the air distribution chamber, which filter chamber extends behind the rear wall from the underpressure channel up to the air inlet of the air distribution chamber.

2. Safety cabinet according to claim 1, wherein the air distribution chamber also comprises a downflow outlet which debouches at the top of the working space and which downflow outlet is provided with a downflow fan for recirculating air from the air distribution chamber to the working chamber.

3. Safety cabinet according to claim 2, wherein the downflow outlet comprises a downflow filter for additional filtering of the recirculated air.

4. Safety cabinet according to any one of the foregoing claims, wherein the air outlet comprises an air outlet filter for additional filtering of the air exhausted via the air outlet.

5. Safety cabinet according to any one of the foregoing claims, wherein the filter chamber comprises a closable access opening located opposite the rear wall for the purpose of carrying out maintenance on the filter arrangement.

6. Safety cabinet according to any one of the foregoing claims, wherein the at least one inflow opening located close to the worktop extends around the worktop.

7. Safety cabinet according to any one of the foregoing claims, wherein the filter arrangement is arranged wholly on or above the plane in which the worktop extends.

8. Safety cabinet according to any one of the foregoing claims, wherein the filter arrangement comprises at least one V filter, preferably a plurality of V filters arranged in parallel.

9. Safety cabinet according to claim 8, wherein the at least one V filter is arranged in a filter holder, wherein the inflow opening of the at least one V filter is located in the filter holder close to the underpressure channel.

10. Safety cabinet according to claim 9, wherein the at least one V filter is fixed clampingly between the clamping device and the filter holder on the side lying opposite the inflow opening by means of a clamping device.
